(19) Europäisches Patentamt / European Patent Office / Office européen des brevets

(11) **EP 4 094 897 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **21175927.9**

(22) Anmeldetag: **26.05.2021**

(51) Internationale Patentklassifikation (IPC):
**G06T 7/80** *(2017.01)* **G06T 7/77** *(2017.01)*
**G06T 7/73** *(2017.01)* **B25J 9/16** *(2006.01)*

(52) Gemeinsame Patentklassifikation (CPC):
**B25J 9/1692; B25J 9/1697; G06T 7/73; G06T 7/77; G06T 7/80;** G05B 2219/39008; G05B 2219/39016; G05B 2219/39045; G05B 2219/39057; G06T 2207/30204; G06T 2207/30244

(54) **HAND-AUGE-KALIBRIERUNG VON KAMERAGEFÜHRTEN APPARATUREN**

HAND-EYE CALIBRATION OF CAMERA-GUIDED DEVICES

CALIBRAGE MAIN-OEIL DES APPAREILLAGES GUIDÉS PAR CAMÉRA

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.11.2022 Patentblatt 2022/48**

(73) Patentinhaber: **MVTec Software GmbH
80634 München (DE)**

(72) Erfinder: **ULRICH, Markus
76229 Karlsruhe (DE)**

(74) Vertreter: **Vossius & Partner
Patentanwälte Rechtsanwälte mbB
Siebertstraße 3
81675 München (DE)**

(56) Entgegenhaltungen:
**US-A1- 2011 280 472     US-A1- 2015 025 683
US-B1- 6 816 187**

- **Griffith C: "Calibration plate Model 320-5029R available from Cognex Corporation", , 15. Mai 2009 (2009-05-15), Seiten 1-1, XP055855656, Gefunden im Internet: URL:https://www.cognex.com/support/downloads/ns/3/17/190/CALPL-10MM-00.pdf [gefunden am 2021-10-27]**
- **SCHÖNBERGER JOHANNES L ET AL: "Pixelwise View Selection for Unstructured Multi-View Stereo", 17. September 2016 (2016-09-17), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 501 - 5, XP047355357, ISBN: 978-3-642-17318-9 [gefunden am 2016-09-17] * das ganze Dokument ***

EP 4 094 897 B1

**Beschreibung**

**Zusammenfassung der Erfindung**

Die Erfindung beschreibt ein generisches Framework für die Hand-Auge-Kalibrierung von kamerageführten Apparaturen, bei denen die starre 3D-Transformation zwischen der Apparatur und der Kamera bestimmt werden muss. Ein Beispiel für eine solche Apparatur stellt ein kamerageführter Roboter dar. Im Gegensatz zu konventionellen Methoden wird dabei explizit die Ungenauigkeit des Roboters auf statistisch fundierte Weise modelliert. Dies ist z.B. auch bei Industrierobotern relevant. Obwohl die Präzision moderner Industrieroboter hoch ist, ist ihre absolute Genauigkeit typischerweise deutlich geringer. Diese Ungenauigkeit verschlechtert das Ergebnis der Hand-Auge-Kalibrierung falls die Ungenauigkeit nicht explizit berücksichtigt wird. Das in der Erfindung vorgeschlagene Verfahren führt nicht nur zu einer hohen Genauigkeit der berechneten Hand-Auge-Pose, sondern liefert auch zuverlässige Informationen über die Genauigkeit des Roboters. Es liefert darüber hinaus korrigierte Roboterposen, die für eine einfache und kostengünstige Roboterkalibrierung verwendet werden können. Das beschriebene Framework ist in mehrfacher Hinsicht generisch: Es unterstützt sowohl die Verwendung eines Kalibrierkörpers als auch eine Selbstkalibrierung ohne die Notwendigkeit bekannter 3D-Punkte. Es erlaubt optional die gleichzeitige Kalibrierung der inneren Kameraparameter. Das Framework ist auch hinsichtlich des Robotertyps generisch, unterstützt also z. B. sowohl Knickarm- als auch SCARA-Roboter. Neben Anwendungen mit Industrierobotern können auch weitere Anwendungen von der Erfindung profitieren, in denen kamerageführte Roboter oder andere kamerageführte Apparaturen zum Einsatz kommen.

**Hintergrund der Erfindung**

Die Hand-Auge-Kalibrierung ist für Anwendungen mit kamerageführten Apparaturen unerlässlich. Bei Robotern bestimmt sie die starre 3D-Transformation (Pose) zwischen dem Roboter und der Kamera (Hand-Auge-Pose). Dadurch können Messungen, die im Kamerakoordinatensystem durchgeführt werden, in das Roboterkoordinatensystem transformiert werden. Bei Bin-Picking-Anwendungen mit Industrierobotern wird z. B. die Pose eines Objekts im Koordinatensystem der Kamera mit Hilfe von 3D-Objekterkennung (Hofhauser et al., 2009; Ulrich et al. 2012) ermittelt. Um das Objekt mit dem Roboter greifen zu können, muss die Objektpose in das Koordinatensystem des Roboters transformiert werden.

Bei kamerageführten Medizinrobotern, Servicerobotern und humanoiden Robotern gilt es ebenfalls die Pose des Roboters oder der Roboterhand bezüglich der Kamera zu bestimmten. Bei kamerageführten autonom navigierenden Drohnen bestimmt die Hand-Auge-Kalibrierung die Pose zwischen der Kamera und dem Referenzkoordinatensystem der Drohne. Die Lage des Referenzkoordinatensystems der Drohne bezüglich eines übergeordneten Koordinatensystems kann beispielsweise über ein globales Navigationssatellitensystem (GNSS) und ein inertiales Navigationssystem (INS) erfolgen. Ähnliches gilt für kamerageführte terrestrische Roboter (z.B. Erkundungsroboter oder Rettungsroboter). Im Operationssaal kommen immer öfter Apparaturen zum Einsatz, die den Operateur unterstützen. Bei der Endoskopie muss mit Hilfe der Hand-Auge-Kalibrierung die Lage der Kamera im Koordinatensystem des Endoskops oder des Operationssaals bestimmte werden. Ähnliches gilt bei Anwendungen der Augmented Reality, bei der die Pose zwischen der Kamera und dem Positions- und Orientierungssensors des Headsets über eine Hand-Auge-Kalibrierung ermittelt werden muss. Mit kamerageführten Kränen können Prozesse in der Baubranche automatisiert werden. Ebenso ist das automatisierte Be- und Entladen von Containerschiffen möglich. Auch hier muss über eine Hand-Auge-Kalibrierung die Lage der Kamera im Koordinatensystem des Krans ermittelt werden. Auch wenn der Fokus der Erfindung auf Industrierobotern liegt und daher die nachfolgenden Beschreibungen dieses Szenario beispielhaft zu Grunde legen, können offensichtlich weitere Anwendungen von der Erfindung profitieren, in denen kamerageführte Apparaturen zum Einsatz kommen. Prinzipiell gilt dies für alle Anwendungen, in denen eine Hand-Auge-Kalibrierung sinnvoll ist. Der Begriff Roboter steht im Folgenden also stellvertretend für alle Apparaturen, bei denen eine Hand-Auge-Kalibrierung zum Einsatz kommt.

Im Allgemeinen gibt es zwei Szenarien kamerageführter Roboter (Steger et al. [Kapitel 3.12.2], 2018): Im ersten Szenario ist die Kamera am Endeffektor des Roboters montiert und wird mit dem Roboter an verschiedene Positionen bewegt. Im zweiten Szenario ist die Kamera stationär außerhalb des Roboters montiert und bewegt sich daher nicht bezüglich zur Roboterbasis. Die Pose, die durch die Hand-Auge-Kalibrierung bestimmt werden muss, ist die relative Pose der Kamera in Bezug zum Roboter-Tool im ersten Szenario bzw. die relative Pose der Kamera in Bezug zur Roboterbasis im zweiten Szenario. Die Erfindungsbeschreibung bezieht sich im Folgenden auf das erste Szenario mit einer bewegten Kamera. Sie kann aber auch auf das zweite Szenario mit einer stationären Kamera in analoger Weise angewendet werden.

Konventionelle Ansätze zur Hand-Auge-Kalibrierung gehen davon aus, dass die Pose des Roboter-Tools in Bezug auf die Roboterbasis genau bekannt ist. Bei der Genauigkeit von Robotern muss zwischen der Wiederholgenauigkeit und der absoluten Genauigkeit des Roboters unterschieden werden (ISO 9283:1998): Die Wiederholgenauigkeit beschreibt die Fähigkeit des Roboters, das Tool wiederholt an dieselbe Pose zu bewegen. Die absolute Genauigkeit ist die Fähigkeit des Roboters, das Tool an eine bestimmte Pose im 3D-Raum zu bewegen. Moderne Industrieroboter bieten typischerweise eine sehr hohe Wiederholgenauigkeit, die im Bereich von 0,02-0,15 mm liegt (Shiakolas et al., 2002; Abderrahim et al., 2006; Placzek et Piszszek 2018). Für Anwendungen, bei denen das Roboter-Tool immer die exakt gleiche, vorher eintrainierte Pose einnimmt, ist eine hohe Wiederholgenauigkeit ausreichend. Bei Robotern, die offline programmiert werden, und insbesondere bei kamerageführten Robotern ist aber auch eine hohe absolute Posengenauigkeit wichtig. Leider ist die absolute Posengenauigkeit von Robotern oft viel geringer als die Wiederholgenauigkeit. Die absolute Positionsgenauigkeit liegt typischerweise im Bereich von 0,1 bis 10,0 mm, während die Orientierungsgenauigkeit oft von etwa 0,2 Grad bis zu mehreren Grad reicht (Abderrahim et al, 2006; Placzek und Piszczek, 2018).

Die Roboterkalibrierung ermöglicht eine Verbesserung der Genauigkeit um bis zu einer Größenordnung, in seltenen Fällen sogar bis hin zur Wiederholbarkeit (Shiakolas et al., 2002). Leider erfordert eine Roboterkalibrierung oft hochpräzise Messinstrumente wie Lasertracker (Abderrahim et al., 2006), und ist daher teuer und zeitaufwändig.

Fast alle bisherigen Methoden zur Hand-Auge-Kalibrierung gehen von fehlerfreien Roboterposen aus. Der erfindungsgemäße Ansatz modelliert explizit die Ungenauigkeit des Roboters auf eine statistisch fundierte Weise, was zu einer höheren Genauigkeit der berechneten Hand-Auge-Pose führt. Darüber hinaus liefert der erfindungsgemäße Ansatz verlässliche Informationen über die Ungenauigkeit des Roboters, die ansonsten hochpräzise Messinstrumente erfordern würden. Da das beschriebene Verfahren auch fehlerkorrigierte (kalibrierte) Roboterposen liefert, ermöglicht das Verfahren auch eine einfache und kostengünstige Roboterkalibrierung.

Die meisten bestehenden Ansätze zur Hand-Auge-Kalibrierung erfordern die Aufnahme mehrerer Bilder eines Kalibrierobjektes. Einige wenige, flexiblere und benutzerfreundlichere Lösungen vermeiden die Verwendung von Kalibrierobjekten. Das erfindungsgemäße Verfahren unterstützt beide Varianten, sowohl die kalibrierobjektbasierte Kalibrierung als auch die Selbstkalibrierung ohne die Notwendigkeit bekannter 3D-Punkte. Außerdem erlaubt das erfindungsgemäße Verfahren für beide Varianten optional die gleichzeitige Kalibrierung der inneren Kameraparameter und bietet dadurch eine hohe Benutzerfreundlichkeit.

## Stand der Technik

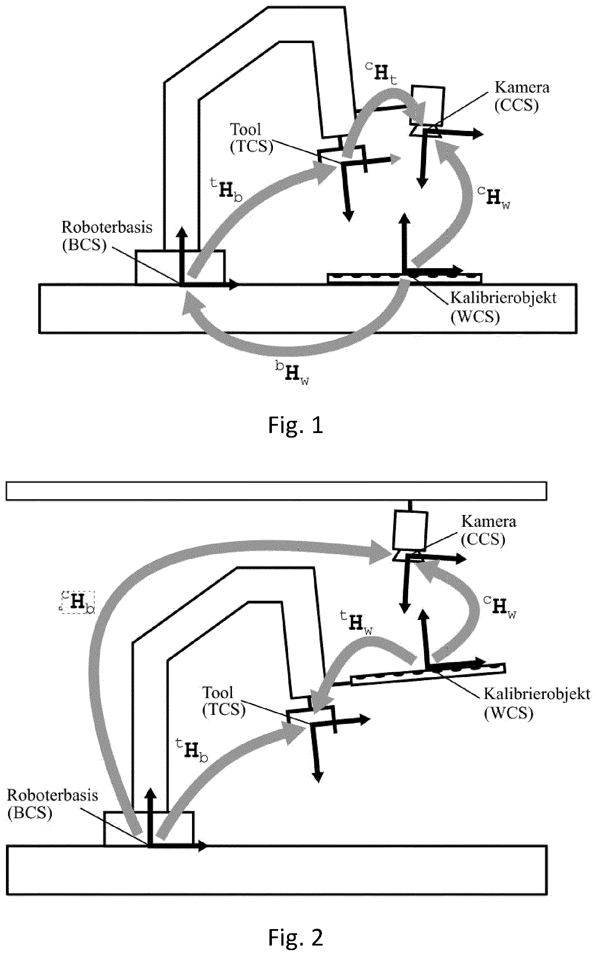

Fig. 1 zeigt die Koordinatensysteme, die für die Hand-Auge-Kalibrierung eines Roboters (Aparatur) mit einer bewegten Kamera relevant sind. Der Fall einer stationären Kamera ist z.B. in (Steger et al. [Kapitel 3.13], 2018) beschrieben und in Fig. 2 gezeigt. Sei $^{s2}\mathbf{H}_{s1}$ die 4x4 homogene Transformationsmatrix, die eine starre 3D-Transformation von Punkten aus dem Koordinatensystem s1 nach s2 darstellt. Eine der gebräuchlichsten Problemformulierungen der Hand-Auge-Kalibrierung basiert auf dem Schließen der folgenden Transformationskette (Strobl und Hirzinger, 2006):

$$(1) \quad ^{b}\mathbf{H}_{w} = {}^{b}\mathbf{H}_{t}\,{}^{t}\mathbf{H}_{c}\,{}^{c}\mathbf{H}_{w}$$

mit den Koordinatensystemen Welt (w, WCS), Kamera (c, CCS), Roboter-Tool (t, TCS) und Roboterbasis (b, BCS) sowie den unbekannten Posen $^{t}\mathbf{H}_{c}$ (Hand-Auge-Pose) und $^{b}\mathbf{H}_{w}$. Die unbekannten Posen werden typischerweise ermittelt, indem der Roboter in verschiedene Posen bewegt wird und in jeder Pose ein Bild des Kalibrierobjektes, das das WCS definiert, aufgenommen wird. Bei jeder Roboterpose (Aparaturpose) wird $^{b}\mathbf{H}_{t}$ von der Robotersteuerung abgefragt und $^{c}\mathbf{H}_{w}$ wird durch PnP-Algorithmen oder Kamerakalibrierung (wie beispielsweise beschrieben in Zhang, 2000) bestimmt.

Formel (1) wird oft wie folgt geschrieben:

$$(2) \quad \mathbf{Y} = \mathbf{A}_i\mathbf{X}\mathbf{B}_i$$

mit den unbekannten Posen **X** und **Y** und den beobachteten Posen $\mathbf{A}_i$ und $\mathbf{B}_i$ für jede der n Roboterposen i (i=1,...,n). Da die wesentliche Unbekannte **X** ist, kann **Y** eliminiert werden, indem man ein Paar von verschiedenen Roboter-Posen i und j betrachtet. Dadurch erhält man $\mathbf{A}_j^{-1}\mathbf{A}_i\mathbf{X} = \mathbf{X}\mathbf{B}_j\mathbf{B}_i^{-1}$. Mit $\mathbf{A} = \mathbf{A}_j^{-1}\mathbf{A}_i$ und $\mathbf{B} = \mathbf{B}_j\mathbf{B}_i^{-1}$ erhält man

$$(3) \quad \mathbf{A}\mathbf{X} = \mathbf{X}\mathbf{B},$$

wobei während der Roboter von Pose i nach j bewegt wird die Bewegung des Tools durch **A** und die Bewegung der Kamera durch **B** repräsentiert wird.

Es gibt mehrere lineare Ansätze, die im Wesentlichen Gl. (2) oder Gl. (3) lösen, z. B. Tsai und Lenz, 1989; Chen, 1991; Horaud und Dornaika, 1995; Dornaika und Horaud, 1998; Daniilidis, 1999; Andreff et al., 2001; Schmidt et al., 2003; Ulrich und Steger, 2016. Sie bestimmen entweder die Rotations- und Translationsanteile der Hand-Auge-Pose nacheinander oder gleichzeitig. Letzteres hat den Vorteil, dass sich Rotationsfehler nicht fortpflanzen und dadurch die Translationsfehler verstärken. Ansätze, die Gl. (3) lösen, erfordern die Auswahl geeigneter Paare von Roboterposen zur Berechnung von **A** und **B**. Auswahlkriterien für geeignete Pose-Paare werden in (Tsai und Lenz,1989; Schmidt et al., 2003; Schmidt und Niemann, 2008) vorgeschlagen. Trotzdem bleibt es schwierig sicherzustellen, dass die beobachteten Informationen (**A**$_i$ und **B**$_i$) optimal ausgenutzt werden. Außerdem setzen diese Ansätze fehlerfreie Roboterposen voraus (Tsai und Lenz, 1989).

Da lineare Ansätze typischerweise einen algebraischen Fehler minimieren, ist deren Genauigkeit begrenzt. Daher werden sie oft zur Initialisierung einer nachfolgenden nicht-linearen Optimierung verwendet, um eine höhere Genauigkeit zu erzielen. Die meisten nicht-linearen Ansätze (Horaud und Dornaika 1995; Dornaika und Horaud, 1998; Daniilidis 1999; Schmidt et al., 2005; Ulrich und Steger, 2016; Steger [Kapitel 3.13.5], 2018), die entweder einen algebraischen oder geometrischen Fehler minimieren, gehen ebenfalls von fehlerfreien Roboterposen aus und stehen oft zusätzlich vor dem Problem, wie die Fehlerkomponenten von Rotation und Translation relativ zueinander gewichtet werden können. Strobl und Hirzinger (2006) minimieren eine gewichtete Summe der Rotations- und Translationsfehleranteile, wobei die Gewichte für die Fehlerkomponenten statistisch abgeleitet werden. Während dies erlaubt, Fehler in den Roboterposen $^b$**H**$_t$ zu berücksichtigen, werden fehlerfreie Kameraposen $^c$**H**$_w$ als Eingabe angenommen. Nguyen und Pham (2018) lösen die Rotations- und Translationsteile von Gl. (3) nacheinander und propagieren die Fehler in **A** und **B** auf **X**.

Eine andere Klasse von Ansätzen minimiert den Rückprojektionsfehler von 3D-Weltpunkten auf einem Kalibrierobjekt (z. B. Tabb und Yousef, 2017) ähnlich wie bei Ansätzen zur Kamerakalibrierung wie (Zhang, 2000). Wichtige Vorteile dieser Klasse von Ansätzen sind, dass die explizite Schätzung der Kameraposition in jedem Bild im Pre-Processing entfällt, keine Vorauswahl von Pose-Paaren erforderlich ist und ein sinnvoller geometrischer Fehler im Raum der beobachteten fehlerbehafteten Messungen, d.h. der Bildpunkte, minimiert wird. Ein weiterer Vorteil ist, dass die Minimierung des Rückprojektionsfehlers auch die gleichzeitige Schätzung der inneren Kameraparameter erlaubt. Allerdings setzen auch diese genannten Verfahren fehlerfreie Roboterposen voraus. In (Koide und Menegatti, 2019) wurde ein Pose-Graph-Optimierungsframework für die Hand-Auge-Kalibrierung vorgestellt, bei dem zusätzlich zum Rückprojektionsfehler der Punkte eines Kalibrierobjekts auch die Fehler der Roboterposen minimiert werden. Der Vorteil der Berücksichtigung der Unsicherheit der Roboterposen wurde durch Experimente nachgewiesen. Leider werden in der Publikation keine Details über das stochastische Modell, die Optimierung und die Gewichtung der verschiedenen Fehlerkomponenten zueinander angegeben.

Ansätze zur Selbstkalibrierung werden verwendet, um die Hand-Auge-Kalibrierung ohne ein Kalibrierobjekt durchzuführen. Dabei werden unbekannte 3D-Punkte in der aus einer vordefinierten Roboterbewegung gewonnenen Bildsequenz verfolgt. Die inneren Kameraparameter und die 3D-Punkte werden gleichzeitig mit der Hand-Auge-Pose geschätzt. In (Andreff et al., 2001) wird ein Structure-from-Motion (SfM)-Ansatz verwendet, bei dem der unbekannte Skalierungsfaktor des SfM-Ergebnisses in die Gleichungen integriert wird. Die Idee wird in (Schmidt et al, 2005) aufgegriffen, wobei der Nachbearbeitungsschritt zur Erzwingung der Orthogonalität der Rotationsmatrix durch Einführung des unbekannten Skalierungsfaktors in die Gleichungen von Horaud und Dornaika (1995) und Daniilidis (1999) vermieden wird. Da die beschriebenen Selbstkalibrierungstechniken algebraische Fehler minimieren, ist die mit diesen Ansätzen erzielbare Genauigkeit begrenzt.

Die US 2011/280472 A1 offenbart die im Oberbegriff von Patentanspruch 1 angegebenen Verfahrensschritte.

Das erfindungsgemäße Verfahren kombiniert die erwähnten Vorteile der Minimierung eines Rückprojektionsfehlers, den Vorteil der stochastischen Modellierung der Ungenauigkeit aller gemessenen Beobachtungen (Bildpunkte und Roboterposen), die Flexibilität, entweder eine kalibrierobjektbasierte Kalibrierung oder eine Selbstkalibrierung durchzuführen, und die Möglichkeit, bekannte innere Kameraparameter zu verwenden oder diese gleichzeitig mit zu schätzen.

Gemäß einem ersten Aspekt stellt die Erfindung ein Verfahren zur Hand-Auge-Kalibrierung für die Bestimmung der Parameter der Hand-Auge-Pose von kamerageführten Apparaturen bereit. Das Verfahren weist dabei die folgenden Schritte auf:

   (a) Ansteuern mehrerer Apparaturposen mit der Apparatur;
   (b) Aufnahme eines Kamerabildes an jeder Apparaturpose;
   (c) Extraktion von Bildmerkmalen in den aufgenommenen Kamerabildern;
   (d) Bestimmung von Näherungswerten für die Parameter der Hand-Auge-Pose; und
   (e) Bestimmung der Parameter der Hand-Auge-Pose unter der Annahme fehlerbehafteter Apparaturposen und fehlerbehafteter extrahierter Bildmerkmale zur impliziten Berücksichtigung fehlerbehafteter Kameraposen, was die folgenden Schritte aufweist

(e1) Statistische Modellierung der Genauigkeiten der Parameter, die die Apparaturpose beschreiben, und der Genauigkeiten der extrahierten Bildmerkmale, wobei die Anzahl der Parameter, die die Apparaturpose beschreiben, mindestens der Anzahl der Freiheitsgrade der Apparatur entspricht;

(e2) Optimierung der Parameter der Hand-Auge-Pose durch gleichzeitige Minimierung eines Rückprojektionsfehlers der Bildmerkmale in den aufgenommenen Kamerabildern und den Fehlern in den Parametern, die die Apparaturpose beschreiben unter Berücksichtigung der Genauigkeiten aus Schritt (e1);

(e3) Berechnung von verbesserten Genauigkeiten der Parameter, die die Apparaturpose beschreiben, und der extrahierten Bildmerkmale anhand der Ergebnisse der Optimierung aus Schritt (e2) mit Hilfe der Varianzkomponentenschätzung; und

(e4) Wiederholung der Schritte (e1) bis (e3) bis zur Konvergenz der Genauigkeiten der Parameter, die die Apparaturpose beschreiben, und der Genauigkeiten der extrahierten Bildmerkmale.

Vorzugsweise ist die Apparatur ein Roboter und die Apparaturposen stellen Roboterposen dar. Alternativ kann die Apparatur ein automatisierter Industriekran sein und die Apparaturposen stellen Kranposen dar.

In einer ersten bevorzugten Ausführungsform weist die Aufnahme eines Kamerabildes an jeder Apparaturpose in Schritt (b) die Aufnahme eines Kamerabildes von einem Kalibrierobjekt auf. Ferne bevorzugt weist die Extraktion von Bildmerkmalen in den aufgenommenen Kamerabildern in Schritt (c) die Extraktion von Kalibriermarken auf dem Kalibrierobjekt in den aufgenommenen Kamerabildern auf. Die Bestimmung von Näherungswerten für die Parameter der Hand-Auge-Pose in Schritt (d) weist vorzugsweise die folgenden Schritte auf: (d1) Bestimmung einer Kamerapose für jede Apparaturpose anhand der im Kamerabild extrahierten Kalibriermarken auf dem Kalibrierobjekt; und (d2) Bestimmung der Näherungswerte für die Parameter der Hand-Auge-Pose mit Hilfe eines Ansatzes zur Hand-Auge-Kalibrierung unter Verwendung der Kameraposen und der Apparaturposen.

In einer alternativen bevorzugten Ausführungsform weist die Aufnahme eines Kamerabildes an jeder Apparaturpose in Schritt (b) die Aufnahme eines Kamerabildes einer Szene auf, die sich für die Extraktion von markanten Bildpunkten eignet. Ferne bevorzugt weist die Extraktion von Bildmerkmalen in den aufgenommenen Kamerabildern in Schritt (c) die Extraktion von markanten Bildpunkten in den aufgenommenen Kamerabildern auf. Die Bestimmung von Näherungswerten für die Parameter der Hand-Auge-Pose in Schritt (d) weist vorzugsweise die folgenden Schritte aufweist: (d1) Bestimmung einer skalierten Kamerapose für jede Apparaturpose anhand der im Kamerabild extrahierten markanten Bildpunkte; (d2) Bestimmung eines Normierungsfaktors anhand der skalierten Kameraposen und der Apparaturposen; (d3) Bestimmung der Kameraposen durch Normierung der skalierten Kameraposen mit Hilfe des Normierungsfaktors; und (d4) Bestimmung der Näherungswerte für die Parameter der Hand-Auge-Pose mit Hilfe eines Ansatzes zur Hand-Auge-Kalibrierung unter Verwendung der Kameraposen und der Apparaturposen.

Vorzugsweise weist das Verfahren ferner die Bestimmung verbesserter (kalibrierter) Aparaturposen aus dem Ergebnis der Optimierung der Parameter der Hand-Auge-Pose auf. Ferner bevorzugt ist der weitere Schritt Bestimmung der Genauigkeit der Apparatur aus dem Ergebnis der Optimierung der Parameter der Hand-Auge-Pose.

Gemäß einem weiteren Aspekt stellt die Erfindung ein Verfahren bereit, wobei die Schritte (d) und (e2) ersetzt werden durch: (d) Bestimmung von Näherungswerten für die Parameter der Hand-Auge-Pose und für die Parameter einer inneren Orientierung der Kamera; und (e2) Optimierung der Parameter der Hand-Auge-Pose und der Parameter der inneren Orientierung der Kamera durch gleichzeitige Minimierung eines Rückprojektionsfehlers der Bildmerkmale in den aufgenommenen Kamerabildern und den Fehlern in den Parametern, die die Apparaturpose beschreiben unter Berücksichtigung der Genauigkeiten aus Schritt (e1). Anders ausgedrückt stellt der zweite Aspekt ein Verfahren wie folgt bereit:

(a) Ansteuern mehrerer Apparaturposen mit der Apparatur;

(b) Aufnahme eines Kamerabildes an jeder Apparaturpose;

(c) Extraktion von Bildmerkmalen in den aufgenommenen Kamerabildern;

(d) Bestimmung von Näherungswerten für die Parameter der Hand-Auge-Pose und für die Parameter einer inneren Orientierung der Kamera; und

(e) Bestimmung der Parameter der Hand-Auge-Pose unter der Annahme fehlerbehafteter Apparaturposen und fehlerbehafteter extrahierter Bildmerkmale zur impliziten Berücksichtigung fehlerbehafteter Kameraposen, was die folgenden Schritte aufweist

(e1) Statistische Modellierung der Genauigkeiten der Parameter, die die Apparaturpose beschreiben, und der Genauigkeiten der extrahierten Bildmerkmale, wobei die Anzahl der Parameter, die die Apparaturpose beschreiben, mindestens der Anzahl der Freiheitsgrade der Apparatur entspricht;

(e2) Optimierung der Parameter der Hand-Auge-Pose und der Parameter der inneren Orientierung der Kamera durch gleichzeitige Minimierung eines Rückprojektionsfehlers der Bildmerkmale in den aufgenommenen Kamerabildern und den Fehlern in den Parametern, die die Apparaturpose beschreiben unter Berücksichtigung der Genauigkeiten aus Schritt (e1);

(e3) Berechnung von verbesserten Genauigkeiten der Parameter, die die Apparaturpose beschreiben, und der extrahierten Bildmerkmale anhand der Ergebnisse der Optimierung aus Schritt (e2) mit Hilfe der Varianzkomponentenschätzung; und

(e4) Wiederholung der Schritte (e1) bis (e3) bis zur Konvergenz der Genauigkeiten der Parameter, die die Apparaturpose beschreiben, und der Genauigkeiten der extrahierten Bildmerkmale.

In den Figuren zeigt

Fig. 1    die Koordinatensysteme, die für die Hand-Auge-Kalibrierung eines Roboters (Aparatur) mit einer bewegten Kamera relevant sind; und

Fig. 2    die Koordinatensysteme, die für die Hand-Auge-Kalibrierung eines Roboters (Aparatur) im Fall einer stationären Kamera.

## Detaillierte Beschreibung der Erfindung

Zunächst wird das der Erfindung zu Grunde liegende Kameramodell und das Kalibrierungsmodell beschrieben, d.h. die Beziehung zwischen 3D-Weltpunkten und ihrer Projektion in die Kamera. Zur einfacheren Beschreibung der Erfindung wird davon ausgegangen, dass es sich bei der kamerageführten Apparatur um einen kamerageführten Roboter handelt. Die Beschreibungen lassen sich durch eine fachkundige Person in einfache Weise auf andere kamerageführte Apparaturen, wie sie weiter oben beschrieben wurden, übertragen. Des Weiteren wird davon ausgegangen, dass die Kameras auf dem Endeffektor des Roboters montiert ist. Die Erfindungsbeschreibung bezieht sich somit in erster Linie auf den Fall einer bewegten Kamera. Aus der Literatur ist bekannt, dass der Fall einer stationären Kamera zum Fall einer bewegten Kamera äquivalent ist. Daher wird im Folgenden nur an den Stellen auf den Fall einer stationären Kamera eingegangen, bei denen die Äquivalenz nicht offensichtlich ist. Im Anschluss werden drei alternative Optimierungsverfahren zur Hand-Auge-Kalibrierung beschrieben. Zuletzt werden Methoden beschrieben, die die notwendigen Startwerte für die Unbekannten in den Optimierungsverfahren liefern.

## Kameramodell

In einer bevorzugten Ausführungsform der Erfindung wird die Kamera durch das in (Steger et al. [Kapitel 3.9.1], 2018) beschriebene perspektivische Kameramodell beschrieben: Bei Verwendung homogener Koordinaten wird ein 3D-Punkt $\boldsymbol{p}_{\mathrm{w}}$ im WCS in einen Punkt $\boldsymbol{p}_{\mathrm{c}}$ im CCS transformiert durch

$$\boldsymbol{p}_{\mathrm{c}} = {}^{\mathrm{c}}\mathbf{H}_{\mathrm{w}}\boldsymbol{p}_{\mathrm{w}} = \begin{pmatrix} \mathbf{R} & \boldsymbol{t} \\ \boldsymbol{0}^{\top} & 1 \end{pmatrix} \boldsymbol{p}_{\mathrm{w}} \qquad (4)$$

wobei $\boldsymbol{t} = (t_{\mathrm{x}},t_{\mathrm{y}},t_{\mathrm{z}})^{\top}$ ein Translationsvektor und $\mathbf{R}$ eine durch Euler-Winkel parametrisierte Rotationsmatrix ist: $\mathbf{R} = \mathbf{R}_x(\alpha)\mathbf{R}_y(\beta)\mathbf{R}_z(\gamma)$. Die Parameter $(t_{\mathrm{x}},t_{\mathrm{y}},t_{\mathrm{z}},\alpha,\beta,\gamma)$ beschreiben die äußere Orientierung der Kamera und repräsentieren somit eine starre Transformation in 3D. In einer alternativen Ausführungsformen der Erfindung wird die äußere Orientierung durch eine andere geeignete Parametrisierung repräsentiert. Beispielsweise kann der Rotationsteil der äußeren Orientierung durch Quaternionen dargestellt werden oder die gesamte äußere Orientierung durch duale Quaternionen (Daniilidis, 1999).

Der Punkt $\boldsymbol{p}_c = (x_{\mathrm{c}},y_{\mathrm{c}},z_{\mathrm{c}})^{\top}$ wird dann in die Bildebene projiziert durch

$$\begin{pmatrix} x_{\mathrm{u}} \\ y_{\mathrm{u}} \end{pmatrix} = \frac{c}{z_{\mathrm{c}}} \begin{pmatrix} x_{\mathrm{c}} \\ y_{\mathrm{c}} \end{pmatrix} , \qquad (5)$$

mit der Kammerkonstante $C$ des Objektivs. In einer alternativen Ausführungsform der Erfindung können stattdessen andere Kameramodelle eingesetzt werden (z. B. für telezentrische Objektive, Steger et al. [Kapitel 3.9], 2018). Anschließend wird zur Berücksichtigung von Objektivverzeichnungen der unverzerrte Punkt $(x_{\mathrm{u}},y_{\mathrm{u}})^{\top}$ zu $(x_{\mathrm{d}},y_{\mathrm{d}})^{\top}$ verzerrt. In einer bevorzugten Ausführungsform der Erfindung wird zur Modellierung der Objektivverzeichnung das Divisionsmodell (Lenz und Fritsch, 1990) verwendet:

$$\begin{pmatrix} x_{\mathrm{u}} \\ y_{\mathrm{u}} \end{pmatrix} = \frac{1}{1 + \kappa r_{\mathrm{d}}^2} \begin{pmatrix} x_{\mathrm{d}} \\ y_{\mathrm{d}} \end{pmatrix} , \qquad (6)$$

das radialsymmetrische Verzeichnungen durch den Parameter $\kappa$ modelliert. Dabei ist $r_{\mathrm{d}}^2 = x_{\mathrm{d}}^2 + y_{\mathrm{d}}^2$. In einer weiteren bevorzugten Ausführungsform der Erfindung wird das polynomielle Modell (Brown, 1971) verwendet, das sowohl radialsymmetrische als auch tangentiale Verzeichnungen modelliert. In alternativen Ausführungsformen der Erfindung können auf offensichtliche Weise andere alternative Verzeichnungsmodelle verwendet werden ohne den Geltungsbereich der Erfindung zu verlassen.

Schließlich wird der verzerrte Punkt $(x_{\mathrm{d}}, y_{\mathrm{d}})^\top$ ins Bildkoordinatensystem transformiert:

$$\boldsymbol{p}_{\mathrm{i}} = \begin{pmatrix} x_{\mathrm{i}} \\ y_{\mathrm{i}} \end{pmatrix} = \begin{pmatrix} x_{\mathrm{d}}/s_x + c_x \\ y_{\mathrm{d}}/s_y + c_y \end{pmatrix} \qquad (7)$$

wobei $(c_x, c_y)^\top$ den Bildhauptpunkt darstellt und $s_x$ und $s_y$ die horizontalen und vertikalen Abstände benachbarter Sensorelemente beschreiben.

Die sechs Parameter $\boldsymbol{i} = (c, \kappa, s_x, s_y, c_x, c_y)^\top$ für das Divisionsmodell (bzw. zehn Parameter für das polynomielle Modell) beschreiben die innere Orientierung $\boldsymbol{i}$ der Kamera.

**Kalibriermodell**

Bei der Hand-Auge-Kalibrierung wird die Apparatur zu verschiedenen Apparaturposen bewegt. Im Fall des für die Erfindungsbeschreibung herangezogene Beispiels eines Roboters mit bewegter Kamera wird das Tool des Roboters zu $n_{\mathrm{r}}$ verschiedenen Posen bewegt und in jeder dieser Roboterposen ein Kamerabild aufgenommen. Bei der kalibrierobjektbasierten Kalibrierung wird das Kalibrierobjekt an einer festen Position im Arbeitsraum des Roboters platziert (siehe Fig. 1). Im Fall der Selbstkalibrierung werden stattdessen Kamerabilder von einer Szene aufgenommen, die sich für die Extraktion von markanten Bildpunkten eignet. Dies kann z.B. die Aufnahme eines ausreichend strukturierten Objekts oder die einer beliebigen, aber strukturierten Hintergrundszene. Sei ${}^{\mathrm{t}}\mathbf{H}_{\mathrm{b},j}$ die Roboterpose, die von der Robotersteuerung an der Pose $j$ ($j = 1, \ldots, n_{\mathrm{r}}$) zurückgegeben wird. Ferner seien die (im WCS gegebenen) 3D-Weltpunkte des Kalibrierobjekts bzw. in der Szene $\boldsymbol{p}_{\mathrm{k}}$ ($k = 1, \ldots, n_{\mathrm{w}}$) und deren 2D-Projektionen in das Bild der Roboterpose $j$ seien $\boldsymbol{p}_{j,k}$. Dann ist die Projektion eines 3D-Punktes ins Bild beschreiben durch:

$$\boldsymbol{p}_{j,k} = \pi({}^{\mathrm{c}}\mathbf{H}_{\mathrm{t}}\,{}^{\mathrm{t}}\mathbf{H}_{\mathrm{b},j}\,{}^{\mathrm{b}}\mathbf{H}_{\mathrm{w}}\boldsymbol{p}_k, \boldsymbol{i}) , \qquad (8)$$

wobei $\pi(\boldsymbol{p}_{\mathrm{c}}, \boldsymbol{i})$ die Projektion eines Punktes $\boldsymbol{p}_{\mathrm{c}}$, der im CCS gegeben ist, ins Bild darstellt. Im Falle des Divisionsmodells entspricht $\pi(\boldsymbol{p}_{\mathrm{c}}, \boldsymbol{i})$ z.B. der aufeinanderfolgenden Ausführung von Gl. (5), der Inversen von Gl. (6) und von Gl. (7) unter Verwendung der inneren Orientierung $\boldsymbol{i}$. Schließlich beinhaltet der Vektor $\boldsymbol{e}_{\mathrm{t},j}$ die Transformationsparameter der Roboter-Posen ${}^{\mathrm{t}}\mathbf{H}_{\mathrm{b},j}$, der Vektor $\boldsymbol{e}_{\mathrm{c}}$ die Transformationsparameter der unbekannten Hand-Auge-Pose ${}^{\mathrm{c}}\mathbf{H}_{\mathrm{t}}$ und der Vektor $\boldsymbol{e}_{\mathrm{b}}$ die Transformationsparameter der unbekannten Pose ${}^{\mathrm{b}}\mathbf{H}_{\mathrm{w}}$ (analog zu den oben beschriebenen Parametern der äußeren Orientierung von ${}^{\mathrm{c}}\mathbf{H}_{\mathrm{w}}$). In einer bevorzugten Ausführungsform der Erfindung sind die Transformationsparameter die drei Komponenten der Translation sowie die drei Euler-Winkel der Rotation. In alternativen Ausführungsformen werden die Rotationsanteile der Transformationen durch Quaternionen (4 Parameter) beschrieben oder die Transformationen durch duale Quaternionen (8 Parameter). Die Erfindung erlaubt darüber hinaus die Verwendung von weiteren alternativen Parametrisierungen der Transformationen, so dass sich die Erfindung auf einfache Weise in bestehende Verfahren integrieren lässt. Die Anzahl der Parameter, die die Roboterposen ${}^{\mathrm{t}}\mathbf{H}_{\mathrm{b},j}$ beschreiben, muss dabei allerdings mindestens der Anzahl an Freiheitsgraden des Roboters entsprechen. Während z.B. die meisten Industrieroboter 6 Freiheitsgrade abdecken, gibt es spezielle Roboterausführungen, die weniger Freiheitsgrade zulassen. Ein Beispiel hierfür sind SCARA-Roboter, die lediglich 4 Freiheitsgrade (3 Translationen und 1 Rotation) besitzen (Ulrich und Steger, 2016). Eine Überparametrisierung, wie sie z.B. bei der Verwendung von Quaternionen oder dualen Quaternionen gegeben ist, ist dagegen möglich. Andere kamerageführte Apparaturen können ebenfalls eingeschränkte Freiheitsgrade besitzen. Manche terrestrische Roboter können sich z.B. zwar in der Ebene bewegen, haben aber keine Möglichkeit diese Ebene zu verlassen. Da sie dadurch nur um eine Achse rotieren und sich in zwei Richtungen bewegen können, haben sie lediglich 3 Freiheitsgrade (1 Rotation und 2 Translationen).

Im Fall einer stationären Kamera wird ein Kalibrierobjekt (für die kalibrierobjektbasierten Kalibrierung) oder ein ausreichend strukturiertes Objekt (für die Selbstkalibrierung) am Endeffektor des Roboters montiert und somit mit dem Roboter mitbewegt. Die stationäre Kamera nimmt dann an jeder angefahrenen Roboterpose ein Kamerabild des mitbewegten Objekts auf. Im Fall der Selbstkalibrierung kann es dabei hilfreich sein, auf einen möglichst homogenen und strukturlosen Hintergrund zu achten, um die Lage des Objektes möglichst robust und automatisiert in den Kamerabildern erkennen zu können. Die Pose $^c\mathbf{H}_t$ im bewegten Fall entspricht der Pose $^c\mathbf{H}_b$ im stationären Fall. Die Pose $^b\mathbf{H}_w$ im bewegten Fall entspricht der Pose $^t\mathbf{H}_w$ im stationären Fall. Die Rolle der Posen $^c\mathbf{H}_w$ und $^t\mathbf{H}_{b,j}$ bleibt dagegen unverändert.

## Parameterschätzung im Gauß-Markov-Modell

Im Folgenden wird zwischen dem funktionalen Modell und dem stochastischen Modell unterschieden (Förstner und Wrobel, 2016). Das funktionale Modell beschreibt die Beziehungen zwischen den Beobachtungen und den unbekannten Parametern. Im stochastischen Modell werden die Beobachtungen und die Unbekannten als Zufallsvariablen mit Unsicherheiten behandelt, wobei die Unsicherheiten durch (Ko-)Varianzen beschrieben werden.

Wenn man zunächst von fehlerfreien Roboterposen ausgeht, kann das Problem der Hand-Auge-Kalibrierung im sog. Gauß-Markov-Modell formuliert werden (Förstner und Wrobel [Kapitel 4. 4], 2016), da alle fehlerbehafteten Beobachtungen $\mathbf{l}$ als Funktion $\mathbf{l} = \mathbf{f}(\mathbf{x})$ der unbekannten Parameter $\mathbf{x}$ ausgedrückt werden können, wobei $\mathbf{f}$ das funktionale Modell beschreibt und Gl. (8) entspricht.

Der Vektor $\mathbf{l}$ enthält die gemessenen Bildpunkte $\mathbf{l} = \left( \mathbf{p}_{1,1}^\top, \cdots, \mathbf{p}_{1,n_w}^\top, \cdots, \mathbf{p}_{n_r,n_w}^\top \right)^\top$ , d.h. die extrahierten Bildmerkmale in den aufgenommenen Kamerabildern. Im Fall der kalibrierobjektbasierten Kalibrierung stellen die extrahierten Bildmerkmale in einer bevorzugten Ausführungsform der Erfindung die Projektion der Mittelpunkte von kreisförmigen Marken auf einem Kalibrierkörper dar (Steger und Ulrich, 2018). In einer alternativen Ausführungsform der Erfindung stellen sie die Projektion der Kreuzungspunkte eines Schachbrett-Musters auf einem Kalibrierkörper dar (OpenCV, 2021). Im Fall der Selbstkalibrierung stellen die extrahierten Bildmerkmale markante Bildpunkte dar, die mit Hilfe von entsprechenden Bildverarbeitungsoperatoren in den Bildern berechnet und über verschiedene Bilder einander zugeordnet werden. Beispiele für solche Bildverarbeitungsoperatoren sind der Förstner-Punktextraktor (Förstner, 1994), der Harris-Punktextraktor (Harris und Stephens, 1988) und der SIFT-Punktextraktor (Lowe, 2004).

Wenn ein 3D-Punkt in einem bestimmten Bild nicht sichtbar ist, wird der entsprechende Eintrag in $\mathbf{l}$ weggelassen. Mit $n_i$ wird die Summe der gemessenen Bildpunkte über alle Bilder bezeichnet, d.h. die Anzahl der Beobachtungen $n_1$ ist $2n_i$. Für jeden beobachteten Bildpunkt werden zwei Gleichungen der Form (8) aufgestellt. Somit ergeben sich $2n_i$ Gleichungen. Der Aufbau des Vektors $\mathbf{x}$ hängt vom Anwendungsszenario ab und kann nach folgendem Regelwerk festgelegt werden:

- Für alle Szenarien enthält $\mathbf{x}$ die Hand-Augen-Pose: $\mathbf{x} := \mathbf{e}_c$. Bei SCARA-Robotern gibt es die Besonderheit zu beachten, dass nicht alle Parameter der Hand-Auge-Pose bestimmt werden können. Wird die Hand-Auge-Pose beispielsweise durch 3 Translation- und 3 Eulerwinkel parametrisiert, kann bei der Kalibrierung von SCARA-Robotern der Parameter $t_z$ der Roboterpose nicht bestimmt werden. In diesem Fall wird $t_z$ auf 0 gesetzt und von der Optimierung ausgeschlossen (Ulrich und Steger, 2016).

- Für eine kalibrierobjektbasierte Kalibrierung muss $\mathbf{x}$ um die Unbekannten $\mathbf{e}_b$ erweitert werden:

$$\mathbf{x} := \left( \mathbf{x}^\top, \mathbf{e}_b^\top \right)^\top$$

. Im Fall der Selbstkalibrierung können die 3D-Punkte dagegen direkt im BCS rekonstruiert werden. Daher kann in diesem Fall $\mathbf{e}_b$ von den Unbekannten ausgeschlossen werden und intern z.B. auf $\mathbf{e}_b = (0, 0, 0, 0, 0, 0)^\top$ gesetzt werden für den Fall dass $\mathbf{e}_b$ durch 3 Rotations- und 3 Translationsparameter beschrieben wird. Bei anderen Parametrisierungen können die Parameter so gewählt werden, dass sie in der gewählten Parametrisierung die Einheitsabbildung beschreiben.

- Wenn die innere Orientierung der Kamera unbekannt ist und gleichzeitig mitgeschätzt werden soll, wird der Vektor mit den Unbekannten um die Parameter der inneren Orientierung erweitert: $\mathbf{x} := (\mathbf{x}^\top, \mathbf{i}^\top)^\top$. Zu beachten ist, dass $s_y$ typischerweise von der Kalibrierung ausgeschlossen werden muss um eine eindeutige Lösung zu erhalten (Steger et al. [Kapitel 3.9.4.2], 2018).

- Im Fall der Selbstkalibrierung muss $\mathbf{x}$ um die Koordinaten der 3D-Punkte erweitert werden:

$$x := (x^\top, p_1^\top, \ldots, p_{n_\mathrm{w}}^\top)^\top.$$

Sei $n_\mathrm{x}$ die endgültige Anzahl an unbekannten Parameter in $x$.

Das stochastische Modell spezifiziert die statistischen Eigenschaften des Beobachtungsprozesses. Im vorliegenden Fall wird von fehlerbehafteten extrahierten Bildmerkmalen ausgegangen. Unter der Annahme, dass die Bildpunkte unkorreliert sind und mit der gleichen Genauigkeit gemessen werden, wird die $n_1 \times n_1$ Gewichtskoeffizientenmatrix der Beobachtungen auf die Einheitsmatrix gesetzt: $Q_{ll} = I$.

Zur Linearisierung wird die $2n_\mathrm{i} \times n_\mathrm{x}$ Jacobimatrix $\mathbf{A}$ aufgestellt, die die ersten Ableitungen von $f$ nach den Unbekannten $x$ beinhaltet, ausgewertet an der Stelle der Startwerte bzw. aktuellen Näherungswerten für die Unbekannten $x^{(0)}$ (die Ermittlung der Startwerte wird weiter unten beschrieben):

$$\mathbf{A} = \left. \frac{\partial f(x)}{\partial x} \right|_{x=x^{(0)}}.$$

$$(9)$$

Mit $\Delta l = l - f(x^{(0)})$ und der Gewichtsmatrix $\mathbf{P}_{ll} = \mathbf{Q}_{ll}^{-1}$ können nun Korrekturen $\triangle \hat{x}$ für die Unbekannten berechnet werden. Dies erfolgt durch Auflösen von

$$(10) \quad \mathbf{A}^\top \mathbf{P}_{ll} \mathbf{A} \triangle \hat{x} = \mathbf{A}^\top \mathbf{P}_{ll} \Delta l$$

nach $\triangle \hat{x}$ z.B. durch Cholesky-Zerlegung unter Ausnutzung der dünn-besetzten Matrizen (der Dach-Operator ^ beschreibt in der Statistik einen geschätzten Wert). Somit ergeben sich die verbesserten Unbekannten zu $\hat{x}^{(1)} = x^{(0)} + \triangle \hat{x}$. Die Gleichungen (9) und (10) werden schließlich bis zur Konvergenz wiederholt angewendet. Dies entspricht der Minimierung des Rückprojektionsfehlers der 3D-Punkte in die Kamerabilder.

Nach Konvergenz erhält man die Kovarianzmatrix der ursprünglichen Beobachtungen durch $\mathbf{C}_{ll} = \hat{\sigma}_0^2 \mathbf{Q}_{ll}$, wobei der Varianzfaktor $\hat{\sigma}_0^2 = \hat{v}^\top \mathbf{P}_{ll} \hat{v} / r$, die Residuen $\hat{v} = \mathbf{A} \triangle \hat{x} - \Delta l$, und die Redundanz $r = n_1 - n_\mathrm{x}$. Die korrigierten Beobachtungen erhält man durch $\hat{l} = l + \hat{v}$. Die Kovarianzmatrix der geschätzten Unbekannten erhält man durch Varianzfortpflanzung

$$\mathbf{C}_{\hat{x}\hat{x}} = \hat{\sigma}_0^2 (\mathbf{A}^\top \mathbf{P}_{ll} \mathbf{A})^{-1}.$$

Im Folgenden werden nun zwei alternative Vorgehensmodelle (Parameterschätzung im Gauß-Helmert-Modell und Parameterschätzung im Gauß-Markov-Modell mit Fiktiven Unbekannten) beschrieben für die Bestimmung der Parameter der Hand-Auge-Pose unter der Annahme fehlerbehafteter Roboterposen und fehlerbehafteter extrahierter Bildmerkmalen zur impliziten Berücksichtigung fehlerbehafteter Kameraposen:

**Parameterschätzung im Gauß-Helmert-Modell**

Um fehlerbehaftete Roboterposen zu berücksichtigen, müssen diese zusätzlich zu den Bildkoordinaten der extrahierten Bildmerkmale als Beobachtungen eingeführt werden. Daher können die Beobachtungen nicht mehr als Funktion der Unbekannten ausgedrückt werden. Die Parameterschätzung kann damit nicht mehr ohne Weiteres im Gauß-Markov-Modell erfolgen. In einer Ausführungsform der Erfindung erfolgt die Parameterschätzung daher im Gauß-Helmert-Modell (Förstner und Wrobel [Kapitel 4.8], 2016). Das Funktionalmodell wird zu $f(x,l) = 0$.

In diesem Modell enthält der Vektor $l$ die fehlerbehafteten beobachteten Bildpunkte der extrahierten Bildmerkmale und die fehlerbehafteten Roboterposen

$$l = (p_{1,1}^\top, \ldots, p_{1,n_\mathrm{w}}^\top, \ldots, p_{n_\mathrm{r},n_\mathrm{w}}^\top, e_{\mathrm{t},1}^\top, \ldots, e_{\mathrm{t},n_\mathrm{r}}^\top)^\top.$$ Die Anzahl der Beobachtungsgleichungen ist weiterhin $2n_\mathrm{i}$. Allerdings ist die Anzahl der Beobachtungen jetzt $n_1 = 2n_\mathrm{i} + 6n_\mathrm{r}$ für den Fall, dass die Roboterposen durch 3 Translations- und 3 Rotationsparameter repräsentiert werden. Im Fall einer alternativen Repräsentation der Roboterposen würde sich $n_l$ entsprechend ändern, z.B. wäre $n_l = 2n_i + 8n_r$ bei der Verwendung von dualen Quaternionen, da duale Quaternionen 8 Parameter enthalten. Der Vektor $\boldsymbol{x}$ der Unbekannten ist identisch mit dem des Gauß-Markov-Modells.

Im Vergleich zum Gauß-Markov-Modell muss das stochastische Modell zusätzlich die Unsicherheiten der Roboterposen berücksichtigen. Tests an realen Systemen haben gezeigt, dass die Fehler in den Roboterposen mittelwertfrei und Gauß-verteilt sind (Strobl und Hirzinger, 2006).

Die folgende statistische Modellierung umfasst daher die Genauigkeiten der Parameter, die die Roboterpose beschreiben, und die Genauigkeiten der extrahierten Bildmerkmale, wobei die Anzahl der Parameter, die die Roboterpose beschreiben, mindestens der Anzahl der Freiheitsgrade des Roboters entspricht.

Selbst unter der Annahme unkorrelierter Beobachtungen muss die relative Genauigkeit zwischen verschiedenen Beobachtungsgruppen bekannt sein, um $\boldsymbol{Q_{ll}}$ aufstellen zu können. Für den Fall, dass die Roboterposen durch 3 Translations- und 3 Eulerwinkel repräsentiert werden, sind die drei Beobachtungsgruppen die Bildkoordinaten der extrahierten Bildmerkmale, die Euler-Winkel der Roboterposen und die Translationskomponenten der Roboterposen. Da diese relative Genauigkeit in der Praxis nicht bekannt ist, wird $\boldsymbol{Q_{ll}}$ mit Näherungswerten initialisiert. Die tatsächlichen Varianzen werden dann mit Hilfe des Konzeptes der Varianzkomponenten der Beobachtungen geschätzt (Förstner und Wrobel, 2016). In einer Ausführungsform der Erfindung wird $\boldsymbol{Q_{ll}}$ mit der Einheitsmatrix initialisiert: $\boldsymbol{Q_{ll}} = \boldsymbol{I}$. Dies kann jedoch zu einer unnötig hohen Anzahl an Iterationen zur Schätzung der Varianzkomponenten führen. Daher werden in einer bevorzugten Ausführungsform der Erfindung die Varianzen mit sinnvolleren Werten initialisiert. Eine Möglichkeit bei der Verwendung von Eulerwinkeln ist z.B. die Standardabweichungen der Bildpunkte auf $\sigma_i = 0{,}1$ Pixel, die der Euler-Winkel auf $\sigma_a = 0.1$ Grad und die der Translationskomponenten auf $\sigma_t = 1$ mm zu setzen. Dann ist

$$\boldsymbol{Q}_{ll} = \operatorname{diag}(\operatorname{rep}(\sigma_{\mathrm{i}}^2, 2n_{\mathrm{i}}), \operatorname{rep}([\sigma_{\mathrm{a}}^2, \sigma_{\mathrm{a}}^2, \sigma_{\mathrm{a}}^2, \sigma_{\mathrm{t}}^2, \sigma_{\mathrm{t}}^2, \sigma_{\mathrm{t}}^2], n_{\mathrm{r}}))$$

, wobei die Funktion rep($\boldsymbol{y}$, n) einen Vektor erzeugt, der $n$ Kopien von $\boldsymbol{y}$ enthält.

Die Jacobimatrix $\boldsymbol{A}$ ist die gleiche wie im Gauß-Markov-Modell. Im Gauß-Helmert-Modell muss $\boldsymbol{f}$ auch in Bezug auf die Beobachtungen linearisiert werden. Die Ableitungen nach den Beobachtungen werden in der $2n_i \times n_l$ Jacobimatrix $\boldsymbol{B}$ gespeichert.

$$\boldsymbol{B} = \frac{\partial \boldsymbol{f}(\boldsymbol{x}, \boldsymbol{l})}{\partial \boldsymbol{l}}\bigg|_{\boldsymbol{x}=\boldsymbol{x}^{(0)}} .$$

(11)

Die linke obere $2n_i \times 2n_i$-Untermatrix von $\boldsymbol{B}$ ist dabei eine Diagonalmatrix, bei der alle Diagonalelemente auf 1 gesetzt sind.

Mit $\boldsymbol{w} = \boldsymbol{f}(\boldsymbol{x}^{(0)}, \boldsymbol{l})$ können nun die Korrekturen für die Unbekannten berechnet werden. Hierfür muss

$$\boldsymbol{A}^{\top}(\boldsymbol{B}\boldsymbol{Q}_{ll}\boldsymbol{B}^{\top})^{-1}\boldsymbol{A}\Delta\hat{x} = -\boldsymbol{A}^{\top}(\boldsymbol{B}\boldsymbol{Q}_{ll}\boldsymbol{B}^{\top})^{-1}\boldsymbol{w}$$

(12)

nach $\Delta\hat{\boldsymbol{x}}$ aufgelöst werden (Förstner und Wrobel, 2016).

Diese Modell optimiert demnach die Parameter der Hand-Auge-Pose durch gleichzeitige Minimierung eines Rückprojektionsfehlers der Bildmerkmale in den aufgenommenen Kamerabildern und den Fehlern in den Parametern, die die Roboterpose beschreiben unter Berücksichtigung der Genauigkeiten der Parameter, die die Roboterposen beschreiben und der Genauigkeiten der extrahierten Bildmerkmale.

Nach Konvergenz der Optimierung werden die Varianzkomponenten für jede Beobachtungsgruppe anhand der Ergebnisse der Optimierung geschätzt. Bei der Verwendung von Euler-Winkeln liefert die Varianzkomponentenschätzung korrigierte Werte für ($\sigma_i$, $\sigma_a$ und $\sigma_t$ und damit eine korrigierte Matrix $\boldsymbol{Q_{ll}}$. Das Vorgehen zur Schätzung der Varianzkomponenten ist in (Förstner und Wrobel [Kapitel 4.2.4], 2016) beschrieben. Die Berechnung von $\hat{\boldsymbol{v}}$ und $\hat{\boldsymbol{l}}$ im Gauß-Helmert-Modell kann in (Förstner und Wrobel, 2016) nachgeschlagen werden. Durch die Varianzkomponentenschätzung erhält man verbesserte Genauigkeiten der Parameter, die die Roboterpose beschreiben, und der extrahierten Bildmerkmale.

Schließlich wird die oben beschriebene Optimierung mit den verbesserten Genauigkeiten erneut durchgeführt. Die statistische Modellierung, die Optimierung und die Varianzkomponentenschätzung werden schließlich bis zur Konvergenz der Genauigkeiten der Parameter wiederholt. In der Praxis ist dies typischerweise nach 3 bis 5 Iterationen der Fall.

Optional erhält man die Kovarianzmatrix der Beobachtungen durch $\mathbf{C}_{ll} = \hat{\sigma}_0^2 \mathbf{Q}_{ll}$ mit der Redundanz $r = 2n_{\mathrm{i}} - n_{\mathrm{x}}$. Die Kovarianzmatrix der geschätzten Unbekannten erhält man durch

$$\mathbf{C}_{\hat{x}\hat{x}} = \hat{\sigma}_0^2 (\mathbf{A}^\top (\mathbf{B}\mathbf{Q}_{ll}\mathbf{B}^\top)^{-1}\mathbf{A})^{-1}.$$

Ein weiterer Vorteil dieses Ansatzes ist, dass die Kameraposen nicht als bekannt und fehlerfrei angenommen werden müssen. Dadurch, dass die Kameraposen über die Verkettung fehlerbehafteter beobachteter oder geschätzter Transformationen $^{c}\mathbf{H}_{\mathrm{w}} = {}^{c}\mathbf{H}_{\mathrm{t}}\,{}^{t}\mathbf{H}_{\mathrm{b},j}\,{}^{b}\mathbf{H}_{\mathrm{w}}$ ausgedrückt werden können, berücksichtigt der Ansatz implizit auch fehlerbehaftete Kameraposen.

**Parameterschätzung im Gauß-Markov-Modell mit Fiktiven Unbekannten**

Aufgrund der rechenintensiven Matrixoperationen im Gauß-Helmert-Modell, erfolgt die Parameterschätzung in einer bevorzugten Ausführung der Erfindung in einer effizienteren Variante des Gauß-Markov-Modells. Diese ist zur Parameterschätzung im Gauß-Helmert-Modell äquivalent (Koch, 1999; Koch, 2007). Dabei werden die Roboterposen als sogenannte fiktive Unbekannte eingeführt.

Die zu Grunde liegende Idee dabei ist, die unsicheren Roboterposen gleichzeitig als Beobachtungen und als Unbekannte einzuführen. Der erste Teil des Funktionsmodells ist weiterhin $l$ - $f(x)$. Im Unterschied zur oben beschriebenen Schätzung im Gauß-Markov-Modell werden nun jedoch 6 zusätzliche Beobachtungsgleichungen der Form $e_{t,j} = f_2(e_{t,j})$ für jede Roboterpose $j$ hinzugefügt für den Fall, dass die Roboterposen durch 3 Translations- und 3 Rotationsparameter repräsentiert werden. Bei der Verwendung von Quaternionen für die Rotationenen würden beispielsweise 7 zusätzliche Beobachtungsgleichungen pro Roboterpose hinzukommen, bei der Verwendung von dualen Quaternionen beispielsweise 8. Dabei entspricht die Funktion $f_2$ der Identität. Damit ergeben sich nun $2n_{\mathrm{i}}+6n_{\mathrm{r}}$ Gleichungen für den Fall dass die Roboterposen durch 3 Translations- und 3 Rotationsparameter repräsentiert werden. Der Vektor $l$ enthält also die beobachteten Bildpunkte und die Roboter-Posen

$$l = (p_{1,1}^\top, \ldots, p_{1,n_{\mathrm{w}}}^\top, \ldots, p_{n_{\mathrm{r}},n_{\mathrm{w}}}^\top, e_{t,1}^\top, \ldots, e_{t,n_{\mathrm{r}}}^\top)^\top$$

analog zum oben beschriebenen Gauß-Helmert-Modell. Gleichzeitig werden nun die Roboterposen auch als Unbekannte eingeführt, indem der Unbekanntenvektor entsprechend erweitert wird

$$x := (x^\top, e_{t,j}^\top, \ldots, e_{t,n_{\mathrm{r}}}^\top)^\top.$$

Da $l$ identisch mit dem im Gauß-Helmert-Modell ist, kann für die statistische Modellierung der Genauigkeiten dasselbe stochastische Modell angewendet werden und für den Fall dass die Roboterposen durch 3 Translations- und 3 Rotationsparameter repräsentiert werden, $\mathbf{Q}_{ll} =$

$$\mathrm{diag}(\mathrm{rep}(\sigma_{\mathrm{i}}^2, 2n_{\mathrm{i}}), \mathrm{rep}([\sigma_{\mathrm{a}}^2, \sigma_{\mathrm{a}}^2, \sigma_{\mathrm{a}}^2, \sigma_{\mathrm{t}}^2, \sigma_{\mathrm{t}}^2, \sigma_{\mathrm{t}}^2], n_{\mathrm{r}}))$$

initialisiert werden.

Somit umfasst die statistische Modellierung auch im Gauß-Markov-Modell mit fiktiven Unbekannten die Genauigkeiten der Parameter, die die Roboterpose beschreiben, und die Genauigkeiten der extrahierten Bildmerkmale, wobei die Anzahl der Parameter, die die Roboterpose beschreiben, mindestens der Anzahl der Freiheitsgrade des Roboters entspricht.

Die Berechnung der $(2n_{\mathrm{i}} + 6n_{\mathrm{r}}) \times n_{\mathrm{x}}$ Jacobimatrix $\mathbf{A}$ (für den Fall, dass die Roboterposen durch 6 Parameter repräsentiert werden) und der Korrekturen $\triangle\hat{x}$ erfolgt durch die Gleichungen (9) und (10). In diesem Fall enthält der untere linke Teil von $\mathbf{A}$ Nullen und der untere rechte Teil $\mathbf{I}_{6n_{\mathrm{r}}\times 6n_{\mathrm{r}}}$.

Auch dieses Modell optimiert somit die Parameter der Hand-Auge-Pose durch gleichzeitige Minimierung eines Rückprojektionsfehlers der Bildmerkmale in den aufgenommenen Kamerabildern und den Fehlern in den Parametern, die die Roboterpose beschreiben unter Berücksichtigung der Genauigkeiten der Parameter, die die Roboterposen beschreiben und der Genauigkeiten der extrahierten Bildmerkmale.

Nach der Konvergenz werden die Varianzkomponenten für die Beobachtungsgruppen, wie in (Förstner und Wrobel, 2016) oder (Niemeier [Kapitel 9.3], 2008) beschrieben, anhand der Ergebnisse der Optimierung geschätzt.

Durch die Varianzkomponentenschätzung erhält man verbesserte Genauigkeiten der Parameter, die die Roboterpose beschreiben, und der extrahierten Bildmerkmale.

Schließlich wird die oben beschriebene Optimierung mit den verbesserten Genauigkeiten erneut durchgeführt. Die statistische Modellierung, die Optimierung und die Varianzkomponentenschätzung werden schließlich bis zur Konvergenz der Genauigkeiten der Parameter wiederholt. In der Praxis ist dies typischerweise nach 3 bis 5 Iterationen der Fall.

Optional werden $\mathbf{C}_{ll} = \hat{\sigma}_0^2 \mathbf{Q}_{ll}$, $\hat{l}$ und $\mathbf{C}_{\hat{x}\hat{x}}$ wie in der oben beschriebenen Parameterschätzung im Gauß-Markov-Modell berechnet.

Wie der zuvor beschriebene Ansatz im Gauß-Helmert-Modell hat auch der Ansatz der Parameterschätzung im Gauß-Markov-Modell mit fiktiven Unbekannten den Vorteil, dass die Kameraposen nicht als bekannt und fehlerfrei angenommen werden müssen. Dadurch, dass die Kameraposen über die Verkettung fehlerbehafteter beobachteter oder geschätzter Transformationen $^{c}\mathbf{H}_{w} = {}^{c}\mathbf{H}_{t}\,{}^{t}\mathbf{H}_{b,j}\,{}^{b}\mathbf{H}_{w}$ ausgedrückt werden können, berücksichtigt der Ansatz implizit auch fehlerbehaftete Kameraposen.

## Bestimmung von Näherungswerten für die unbekannten Parameter

In einer bevorzugten Ausführungsform der Erfindung werden die Startwerte der Unbekannten und insbesondere die Näherungswerte für die Parameter der Hand-Auge-Pose durch folgendes Vorgehen gesetzt:

- Näherungswerte für die Hand-Augen-Pose $\mathbf{e}_{c}$ und für $\mathbf{e}_{b}$ werden aus einem beliebigen aus der Literatur bekannten und für diese Zwecke geeigneten Ansatz zur Hand-Auge-Kalibrierung gewonnen. In einer bevorzugten Ausführung der Erfindung wird dafür ein linearer Ansatz zur Hand-Auge-Kalibrierung verwendet, z.B. der Ansatz von Daniilidis (1999). Beim Ansatz von Daniilidis (1999), aber auch bei einigen anderen Ansätzen, ist dafür die vorhergehende Bestimmung einer Kamerapose für jede Roboterpose anhand der im Kamerabild extrahierten Kalibriermarken auf dem Kalibrierobjekt notwendig. Die Bestimmung der Näherungswerte für die Parameter der Hand-Auge-Pose erfolgt dann mit Hilfe eines Ansatzes zur Hand-Auge-Kalibrierung unter Verwendung der Kameraposen und der Roboterposen.
- Die Startwerte für die innere Orientierung werden aus den Datenblättern der Kamera ($s_x$ und $s_y$) und des Objektivs ($c$) gewonnen. Der Bildhauptpunkt $(c_x, c_y)^\top$ wird auf die Bildmitte gesetzt und die Verzeichnungskoeffizienten werden auf 0 gesetzt.
- Im Fall der Selbstkalibrierung erfolgt die Bestimmung von Näherungswerten für die Parameter wie folgt: In einer bevorzugten Ausführungsform der Erfindung wird ein SfM-Ansatz mit den aufgenommenen Kamerabildern durchgeführt. Eine mögliche geeignete SfM-Implementierung ist beispielsweise COLMAP (Schönberger und Frahm, 2016; Schönberger et al, 2016)). Der SfM-Ansatz liefert die Parameter der inneren Orientierung $\mathbf{i}$, skalierte rekonstruierten 3D-Punkte $\mathbf{p}_k$, für jedes Bild $j$ die extrahierten 2D-Bildpunkte der Bildmerkmale $\mathbf{p}_{j,k}$ und eine skalierte äußere Orientierung (d.h. Kamerapose) $^{c}\mathbf{H}_{w,j}$.

In einer alternativen Ausführungsform der Erfindung können beliebige andere geeignete und in der Literatur bekannte Ansätze zur Bestimmung von Startwerten oder Zusatzwissen aus der konkreten Anwendung genutzt werden um die Unbekannten zu initialisieren.

Im Fall der Selbstkalibrierung muss der im SfM-Ansatz inhärent unbekannte Skalierungsfaktor in den Startwerten für $\mathbf{p}_k$ und $^{c}\mathbf{H}_{w,j}$ bestimmt werden. Hierzu wird zunächst der Normierungsfaktor anhand der skalierten Kameraposen und der Roboterposen bestimmt. In einer bevorzugten Ausführungsform der Erfindung werden dafür für alle Paare von Roboterposen $j1$ und $j2$ die Kamerabewegung $^{c2}\mathbf{H}_{c1} = {}^{c}\mathbf{H}_{w,j2}\,{}^{c}\mathbf{H}_{w,j1}^{-1}$ und die Tool-Bewegung $^{t2}\mathbf{H}_{t1} = {}^{t}\mathbf{H}_{b,j2}\,{}^{t}\mathbf{H}_{b,j1}^{-1}$ berechnet. Beide starren 3D-Transformationen werden dann in die Parameter einer Schraubung konvertiert (Daniilidis, 1999). Das Kongruenztheorem (Chen, 1991) besagt, dass der Translationsparameter $d_t$ der Schraubung der Tool-Bewegung mit dem Translationsparameter $d_c$ der Schraubung der Kamerabewegung identisch ist. Somit spiegelt das Verhältnis $d_t/d_c$ den unbekannten Skalenfaktor des SfM-Ansatzes und damit den gesuchten Normierungsfaktor wider. In einer Ausführungsform der Erfindung wird der Mittelwert über die Verhältnisse aller Paare berechnet. In einer bevorzugten Ausführungsform der Erfindung wird für eine höhere Robustheit der Median der Verhältnisse aller Paare berechnet, wobei Verhältnisse ignoriert werden, für die $d_t$ oder $d_c$ unterhalb einer Rauschschwelle liegt.

Schließlich wird der ermittelte Normierungsfaktor verwendet um die skalierten rekonstruierten 3D-Punkte $\mathbf{p}_k$

EP 4 094 897 B1

und die skalierten äußeren Orientierung (d.h. Kameraposen) $^{C}\mathbf{H}_{W,j}$ zu normieren.

### Ermittlung der Genauigkeit des Roboters

Sowohl im Gauß-Helmert-Modell als auch im Gauß-Markov-Modell mit fiktiven Unbekannten ist anhand der Ergebnisse der Optimierung der Parameter der Hand-Auge-Pose die Bestimmung der Genauigkeit des Roboters möglich. Die Schätzung der Varianzkomponenten erlaubt eine sinnvolle Aussage über die Genauigkeit des Roboters zu treffen, wozu normalerweise eine aufwändige Roboterkalibrierung notwendig wäre. Die Genauigkeit des Roboters kann direkt aus der nach der Varianzkomponentenschätzung resultierenden Matrix $\mathbf{C}_{ll}$ abgelesen werden. In einer bevorzugten Ausführungsform der Erfindung, in der die Roboterposen durch 3 Translation- und 3 Rotationsparameter beschrieben werden, werden dazu die Varianzen der Translationsparameter und der Rotationsparameter der Roboterposen über alle Roboterposen separat gemittelt, so dass die Genauigkeit des Roboters in Form von zwei Werten dargestellt werden kann.

### Ermittlung kalibrierter Roboterposen

Sowohl im Gauß-Helmert-Modell als auch im Gauß-Markov-Modell mit fiktiven Unbekannten ist anhand der Ergebnisse der Optimierung der Parameter der Hand-Auge-Pose die Bestimmung von verbesserten (kalibrierten) Roboterposen möglich. Durch die Einführung der Roboterposen als Beobachtungen enthält der Vektor $\hat{l}$ neben den ausgeglichenen Bildkoordinaten auch die ausgeglichenen Roboterposen. Diese können als korrigierte oder kalibrierte Roboterposen angesehen werden. Sie können damit als Grundlage für eine einfache und kostengünstige Roboterkalibrierung genutzt werden.

### Vorteile der Erfindung

Die explizite Modellierung der Unsicherheit einer Apparatur ist vorteilhaft für die Hand-Auge-Kalibrierung. Sie verbessert die Genauigkeit, liefert kalibrierte Apparaturposen und gibt Informationen über die Unsicherheit der Apparatur. Dies ist beispielsweise bei Industrierobotern wichtig, die für Aufgaben eingesetzt werden, die eine hohe Genauigkeit verlangen. Die in der Erfindung vorgeschlagene Parameterschätzung im Gauß-Markov-Modell mit fiktiven Unbekannten kombiniert mit der Schätzung von Varianzkomponenten ermöglicht eine statistisch fundierte Darstellung des Problems. Unterschiedliche Szenarien der Hand-Auge-Kalibrierung (z. B. kalibrierobjektbasierte Kalibrierung, Selbstkalibrierung; Kalibrierung von unterschiedlichen Apparaturen z.B. Knickarm-Industrieroboter, SCARA-Industrieroboter, terrestrische Erkundungsroboter; unbekannte oder bekannte innere Orientierung) können einfach durch Hinzufügen oder Entfernen der entsprechenden Parameter zu bzw. aus den Parametervektoren dargestellt werden. Dadurch kann eine große Anzahl von Anwendungen von dieser Erfindung profitieren.

### Referenzen

M. Abderrahim, A. Khamis, S. Garrido, and L. Moreno, "Accuracy and calibration issues of industrial manipulators," in Industrial Robotics: Programming, Simulation and Application. IntechOpen, 2006, pp. 131-146.
N. Andreff, R. Horaud, and B. Espiau, "Robot hand-eye calibration using structure-from-motion," The International Journal of Robotics Research, vol. 20, no. 3, pp. 228-248, 2001.
D. C. Brown, "Close-range camera calibration," Photogrammetric Engineering, vol. 37, no. 8, pp. 855-866, Aug. 1971.
H. H. Chen, "A screw motion approach to uniqueness analysis of headeye geometry," in Computer Vision and Pattern Recognition, 1991, pp. 145-151.
K. Daniilidis, "Hand-eye calibration using dual quaternions," International Journal of Robotics Research, vol. 18, no. 3, pp. 286-298, 1999.
F. Dornaika and R. Horaud, "Simultaneous robot-world and hand-eye calibration," IEEE Transactions on Robotics and Automation, vol. 14, no. 4, pp. 617-622, 1998.
W. Förstner, "A Framework for Low Level Feature Extraction", in: Jan-Olof Eklundh, eds.: Third European Conference on Computer Vision, Lecture Notes in Computer Science, vol. 801, pp. 383-394, Springer, 1994.
W. Förstner and B. P. Wrobel, Photogrammetric Computer Vision: Statistics, Geometry, Orientation and Reconstruction. Springer International Publishing, 2016.
C. Harris, M. Stephens, "A Combined Corner and Edge Detector", Proceedings of the Fourth Alvey Vision Conference, pp. 147-151, 1988.
A. Hofhauser, C. Steger, and N. Navab, "Perspective planar shape matching," in Image Processing: Machine Vision Applications II, ser. Proc. SPIE 7251, K. S. Niel and D. Fofi, Eds., 2009.

R. Horaud and F. Dornaika, "Hand-eye calibration," International Journal of Robotics Research, vol. 14, no. 3, pp. 195-210, 1995.

ISO 9283:1998, "Manipulating industrial robots - performance criteria and related test methods," 1998.

K.-R. Koch, Parameter Estimation and Hypothesis Testing in Linear Models. Berlin Heidelberg: Springer, 1999.

K.-R. Koch, Introduction to Bayesian Statistics, 2nd ed. Heidelberg: Springer, 2007.

K. Koide and E. Menegatti, "General hand-eye calibration based on reprojection error minimization," IEEE Robotics and Automation Letters, vol. 4, no. 2, pp. 1021-1028, Apr. 2019.

R. Lenz and D. Fritsch, "Accuracy of videometry with CCD sensors," ISPRS Journal of Photogrammetry and Remote Sensing, vol. 45, no. 2, pp. 90-110, 1990.

D. G. Lowe, "Distinctive Image Features from Scale-Invariant Keypoints," International Journal of Computer Vision 60(2): pp. 91-110, 2004.

W. Niemeier, "Ausgleichungsrechung - Statistische Auswertemethoden," 2., überarbeitete und erweiterte Auflage, de Gruyter, Berlin, 2008.

H. Nguyen and Q. Pham, "On the covariance of X in AX = XB," IEEE Transactions on Robotics, vol. 34, no. 6, pp. 1651-1658, 2018.

OpenCV, "Open Computer Vision," Version 4.5.2, Open CV module calib3d, https://docs.opencv.org/4.5.2/d9/d0c/group calib3d.html, accessed 7.4.2021, 2021.

M. Placzek and Ł. Piszczek, "Testing of an industrial robot's accuracy and repeatability in off and online environments," Eksploatacja i Niezawodnosc - Maintenance and Reliability, vol. 20, no. 3, pp. 455-464, 2018.

J. Schmidt and H. Niemann, "Data selection for hand-eye calibration: A vector quantization approach," The International Journal of Robotics Research, vol. 27, no. 9, pp. 1027-1053, 2008.

J. Schmidt, F. Vogt, and H. Niemann, "Robust hand-eye calibration of an endoscopicsurgery robot using dual quaternions," in Pattern Recognition, B. Michaelis and G. Krell, Eds. Springer Berlin Heidelberg, 2003, pp. 548-556.

J. Schmidt, F. Vogt, and H. Niemann, "Calibration-free hand-eye calibration: A structure-from-motion approach," in Pattern Recognition, W. G. Kropatsch, R. Sablatnig, and A. Hanbury, Eds. Springer Berlin Heidelberg, 2005, pp. 67-74.

J. L. Schönberger and J. M. Frahm, "Structure-from-motion revisited," in Conference on Computer Vision and Pattern Recognition (CVPR), 2016.

J. L. Schönberger, E. Zheng, M. Pollefeys, and J.-M. Frahm, "Pixelwise view selection for unstructured multi-view stereo," in European Conference on Computer Vision (ECCV), 2016.

P. Shiakolas, K. Conrad, and T. Yih, "On the accuracy, repeatability, and degree of influence of kinematics parameters for industrial robots," International Journal of Modelling and Simulation, vol. 22, no. 4, pp. 245-254, 2002.

K. H. Strobl and G. Hirzinger, "Optimal hand-eye calibration," in 2006 IEEE/RSJ International Conference on Intelligent Robots and Systems, 2006, pp. 4647-4653.

C. Steger, M. Ulrich, and C. Wiedemann, Machine Vision Algorithms and Applications, 2nd ed. Weinheim: Wiley-VCH, 2018.

A. Tabb and K. M. A. Yousef, "Solving the robot-world handeye(s) calibration problem with iterative methods," Machine Vision and Applications, vol. 28, no. 5, pp. 569-590, Aug. 2017.

R. Y. Tsai and R. K. Lenz, "A new technique for fully autonomous and efficient 3D robotics hand/eye calibration," IEEE Transactions on Robotics and Automation, vol. 5, no. 3, pp. 345-358, June 1989.

M. Ulrich and C. Steger, "Hand-eye calibration of SCARA robots using dual quaternions," Pattern Recognition and Image Analysis, vol. 26, no. 1, pp. 231-239, 2016.

M. Ulrich, C. Wiedemann, and C. Steger, "Combining scale-space and similarity-based aspect graphs forfast 3D object recognition," IEEE Transactions on Pattern Analysis and Machine Intelligence, vol. 34, no. 10, pp. 1902-1914, Oct. 2012.

Z. Zhang, "A flexible new technique for camera calibration," IEEE Transactions on Pattern Analysis and Machine Intelligence, vol. 22, no. 11, pp. 1330-1334, Nov. 2000.

**Patentansprüche**

1. Verfahren zur Hand-Auge-Kalibrierung für die Bestimmung der Parameter der Hand-Auge-Pose von kamerageführten Apparaturen, das die folgenden Schritte aufweist:

   (a) Ansteuern mehrerer Apparaturposen mit der Apparatur;
   (b) Aufnahme eines Kamerabildes an jeder Apparaturpose;
   (c) Extraktion von Bildmerkmalen in den aufgenommenen Kamerabildern; und

(d) Bestimmung von Näherungswerten für die Parameter der Hand-Auge-Pose; **gekennzeichnet durch**

(e) Bestimmung der Parameter der Hand-Auge-Pose unter der Annahme fehlerhafter Apparaturposen und fehlerhafter extrahierter Bildmerkmale zur impliziten Berücksichtigung fehlerhafter Kameraposen, was die folgenden Schritte aufweist

(e1) Statistische Modellierung der Genauigkeiten der Parameter, die die Apparaturpose beschreiben, und der Genauigkeiten der extrahierten Bildmerkmale durch eine Gewichts-, Gewichtskoeffizienten- oder Kovarianzmatrix, wobei die Anzahl der Parameter, die die Apparaturpose beschreiben, mindestens der Anzahl der Freiheitsgrade der Apparatur entspricht;

(e2) Optimierung der Parameter der Hand-Auge-Pose durch gleichzeitige Minimierung eines Rückprojektionsfehlers der Bildmerkmale in den aufgenommenen Kamerabildern und den Fehlern in den Parametern, die die Apparaturpose beschreiben unter Berücksichtigung der Genauigkeiten aus Schritt (e1);

(e3) Berechnung von verbesserten Genauigkeiten der Parameter, die die Apparaturpose beschreiben, und der extrahierten Bildmerkmale anhand der Ergebnisse der Optimierung aus Schritt (e2) mit Hilfe der Varianzkomponentenschätzung; und

(e4) Wiederholung der Schritte (e1) bis (e3) bis zur Konvergenz der Genauigkeiten der Parameter, die die Apparaturpose beschreiben, und der Genauigkeiten der extrahierten Bildmerkmale.

2. Verfahren nach Anspruch 1, wobei die Apparatur ein Roboter ist und Apparaturposen Roboterposen darstellen.

3. Verfahren nach Anspruch 1, oder 2, wobei die Aufnahme eines Kamerabildes an jeder Apparaturpose in Schritt (b) die Aufnahme eines Kamerabildes von einem Kalibrierobjekt beinhaltet und wobei die Extraktion von Bildmerkmalen in den aufgenommenen Kamerabildern in Schritt (c) die Extraktion von Kalibriermarken auf dem Kalibrierobjekt in den aufgenommenen Kamerabildern beinhaltet.

4. Verfahren nach Anspruch 3, wobei die Bestimmung von Näherungswerten für die Parameter der Hand-Auge-Pose in Schritt (d) die folgenden Schritte aufweist:

(d1) Bestimmung einer Kamerapose für jede Apparaturpose anhand der im Kamerabild extrahierten Kalibriermarken auf dem Kalibrierobjekt; und

(d2) Bestimmung der Näherungswerte für die Parameter der Hand-Auge-Pose mit Hilfe eines Ansatzes zur Hand-Auge-Kalibrierung unter Verwendung der Kameraposen und der Apparaturposen.

5. Verfahren nach Anspruch 1, oder 2, wobei die Aufnahme eines Kamerabildes an jeder Apparaturpose in Schritt (b) die Aufnahme eines Kamerabildes einer Szene beinhaltet, die sich für die Extraktion von markanten Bildpunkten eignet und wobei die Extraktion von Bildmerkmalen in den aufgenommenen Kamerabildern in Schritt (c) die Extraktion von markanten Bildpunkten in den aufgenommenen Kamerabildern beinhaltet.

6. Verfahren nach Anspruch 5, wobei die Bestimmung von Näherungswerten für die Parameter der Hand-Auge-Pose in Schritt (d) die folgenden Schritte aufweist:

(d1) Bestimmung einer skalierten Kamerapose für jede Apparaturpose anhand der im Kamerabild extrahierten markanten Bildpunkte, wobei die skalierte Kamerapose eine Kamerapose ist, die mit einem unbekannten Skalierungsfaktor behaftet ist;

(d2) Bestimmung eines Normierungsfaktors als Verhältnis der Translationsparameter zwischen Apparaturposen und skalierten Kameraposen;

(d3) Bestimmung der Kameraposen durch Normierung der skalierten Kameraposen mit Hilfe des Normierungsfaktors; und

(d4) Bestimmung der Näherungswerte für die Parameter der Hand-Auge-Pose mit Hilfe eines Ansatzes zur Hand-Auge-Kalibrierung unter Verwendung der Kameraposen und der Apparaturposen.

7. Verfahren nach einem der Ansprüche 1 bis 6, ferner mit dem Schritt:

(f) Bestimmung verbesserter (kalibrierter) Aparaturposen aus dem Ergebnis der Optimierung der Parameter der Hand-Auge-Pose.

8. Verfahren nach einem der Ansprüche 1 bis 6, ferner mit dem Schritt:

(f) Bestimmung der Genauigkeit der Apparatur aus dem Ergebnis der Optimierung der Parameter der Hand-Auge-Pose.

9. Verfahren nach einem der Ansprüche 1 bis 8, wobei die Schritte (d) und (e2) ersetzt werden durch:

(d) Bestimmung von Näherungswerten für die Parameter der Hand-Auge-Pose und für die Parameter einer inneren Orientierung der Kamera;
(e2) Optimierung der Parameter der Hand-Auge-Pose und der Parameter der inneren Orientierung der Kamera durch gleichzeitige Minimierung eines Rückprojektionsfehlers der Bildmerkmale in den aufgenommenen Kamerabildern und den Fehlern in den Parametern, die die Apparaturpose beschreiben unter Berücksichtigung der Genauigkeiten aus Schritt (e1).

**Claims**

1. A hand-eye calibration method for determining the parameters of the hand-eye pose of camera-guided apparatuses, the method comprising the following steps:

(a) controlling a plurality of apparatus poses with the apparatus;
(b) capturing a camera image at each apparatus pose;
(c) extracting image features in the captured camera images; and
(d) determining approximate values for the parameters of the hand-eye pose; **characterized by**
(e) determining the parameters of the hand-eye pose assuming erroneous apparatus poses and erroneous extracted image features to implicitly account for erroneous camera poses, which comprises the steps of

(e1) statistically modeling the accuracies of the parameters describing the apparatus pose and the accuracies of the extracted image features by a weight matrix, weight coefficient matrix, or covariance matrix, wherein the number of parameters describing the apparatus pose is at least equal to the number of degrees of freedom of the apparatus;
(e2) optimizing the parameters of the hand-eye pose by simultaneously minimizing a back-projection error of the image features in the captured camera images and the errors in the parameters describing the apparatus pose, taking into account the accuracies from step (e1);
(e3) computing improved accuracies of the parameters describing the apparatus pose and the extracted image features based on the results of the optimization from step (e2) using variance component estimation; and
(e4) repeating steps (e1) through (e3) until the accuracies of the parameters describing the apparatus pose and the accuracies of the extracted image features converge.

2. The method according to claim 1, wherein the apparatus is a robot and apparatus poses represent robot poses.

3. The method according to claim 1 or 2, wherein capturing a camera image at each apparatus pose in step (b) comprises capturing a camera image from a calibration object, and wherein extracting image features in the captured camera images in step (c) comprises extracting calibration marks on the calibration object in the captured camera images.

4. The method according to claim 3, wherein determining approximate values for the hand-eye pose parameters in step (d) comprises the following steps:

(d1) determining a camera pose for each apparatus pose using the calibration marks on the calibration object extracted in the camera image; and
(d2) determining the approximate values for the hand-eye pose parameters using a hand-eye calibration approach using the camera poses and the apparatus poses.

5. The method according to claim 1 or 2, wherein capturing a camera image at each apparatus pose in step (b) comprises capturing a camera image of a scene suitable for extracting salient image points, and wherein extracting image features in the captured camera images in step (c) comprises extracting salient image points in the captured camera images.

6. The method according to claim 5, wherein determining approximate values for the hand-eye pose parameters in step (d) comprises the following steps:

(d1) determining a scaled camera pose for each apparatus pose using the salient image points extracted in the camera image, wherein the scaled camera pose is a camera pose which is afflicted with an unknown scaling factor;

(d2) determining a normalization factor as a relationship of the translation parameters between apparatus poses and scaled camera poses;

(d3) determining the camera poses by normalizing the scaled camera poses using the normalization factor; and

(d4) determining the approximate values for the parameters of the hand-eye pose using a hand-eye calibration approach using the camera poses and the apparatus poses.

7. The method according to any one of claims 1 to 6, further comprising the step:
(f) determining improved (calibrated) apparatus poses from the result of optimizing the parameters of the hand-eye pose.

8. The method according to any one of claims 1 to 6, further comprising the step:
(f) determining the accuracy of the apparatus from the result of optimizing the parameters of the hand-eye pose.

9. The method according to any one of claims 1 to 8, wherein steps (d) and (e2) are replaced by:

(d) determining approximate values for the parameters of the hand-eye pose and for the parameters of an inner orientation of the camera;

(e2) optimizing the parameters of the hand-eye pose and the parameters of the inner orientation of the camera by simultaneously minimizing a back-projection error of the image features in the captured camera images and the errors in the parameters describing the apparatus pose, taking into account the accuracies from step (e1).

**Revendications**

1. Procédé d'étalonnage main-oeil pour la détermination des paramètres de la pose main-oeil d'appareils guidés par caméra, comprenant les étapes suivantes :

(a) commande de plusieurs poses d'appareil avec l'appareil ;

(b) capture d'une image par la caméra à chaque pose d'appareil ;

(c) extraction de caractéristiques d'image dans les images de caméra capturées ; et

(d) détermination de valeurs approximatives pour les paramètres de la pose main-oeil ; **caractérisé par**

(e) la détermination des paramètres de la pose main-oeil en supposant des poses d'appareil et des caractéristiques d'image extraites défectueuses pour une prise en compte implicite de poses de caméra défectueuses, comprenant les étapes suivantes :

(e1) modélisation statistique des précisions des paramètres décrivant la pose de l'appareil et des précisions des caractéristiques d'image extraites par une matrice de pondération, de coefficient de pondération ou de covariance, le nombre de paramètres décrivant la pose de l'appareil étant au moins égal au nombre de degrés de liberté de l'appareil ;

(e2) optimisation des paramètres de la pose main-oeil en minimisant simultanément une erreur de rétroprojection des caractéristiques d'image dans les images de caméra capturées et dans les erreurs des paramètres décrivant la pose de l'appareil, les précisions de l'étape (e1) étant prises en compte ;

(e3) calcul de précisions améliorées des paramètres décrivant la pose de l'appareil et des caractéristiques d'image extraites à partir des résultats de l'optimisation de l'étape (e2) au moyen de l'estimation de composante de variance ; et

(e4) répétition des étapes (e1) à (e3) jusqu'à convergence des précisions des paramètres décrivant la pose de l'appareil et des précisions des caractéristiques d'image extraites.

2. Procédé selon la revendication 1, où l'appareil est un robot et les poses de l'appareil représentent des poses du robot.

3. Procédé selon la revendication 1 ou la revendication 2, où la capture d'une image de caméra à chaque pose d'appareil lors de l'étape (b) comprend la capture d'une image de caméra d'un objet d'étalonnage, et où l'extraction de caractéristiques d'image dans les images de caméra capturées comprend, lors de l'étape (c), l'extraction de marques d'étalonnage sur l'objet d'étalonnage dans les images de caméra capturées.

**4.** Procédé selon la revendication 3, où la détermination de valeurs approximatives pour les paramètres de la pose main-oeil lors de l'étape (d) comprend les étapes suivantes :

(d1) détermination d'une pose de caméra pour chaque pose d'appareil à partir des marques d'étalonnage extraites dans l'image de caméra sur l'objet d'étalonnage ; et
(d2) détermination des valeurs approximatives pour les paramètres de la pose main-oeil à l'aide d'une approche d'étalonnage main-oeil recourant aux poses de caméra et aux poses d'appareil.

**5.** Procédé selon la revendication 1 ou la revendication 2, où la capture d'une image de caméra à chaque pose d'appareil lors de l'étape (b) comprend la capture d'une image de caméra d'une scène appropriée pour l'extraction de points d'image marquants, et où l'extraction de caractéristiques d'image dans les images de caméra capturées lors de l'étape (c) comprend l'extraction de points d'image marquants dans les images de caméra capturées.

**6.** Procédé selon la revendication 5, où la détermination de valeurs approximatives pour les paramètres de la pose main-oeil lors de l'étape (d) comprend les étapes suivantes :

(d1) détermination d'une pose de caméra mise à l'échelle pour chaque pose d'appareil à partir des points d'image marquants extraits dans l'image de caméra, la pose de caméra mise à l'échelle étant une pose de caméra affectée d'un facteur de mise à l'échelle inconnu ;
(d2) détermination d'un facteur de normalisation en tant que rapport des paramètres de translation entre les poses d'appareil et les poses de caméra mises à l'échelle ;
(d3) détermination des poses de caméra par normalisation des poses de caméra mises à l'échelle à l'aide du facteur de normalisation ; et
(d4) détermination des valeurs approximatives des paramètres de la pose main-oeil à l'aide d'une approche d'étalonnage main-oeil recourant aux poses de caméra et aux poses d'appareil.

**7.** Procédé selon l'une des revendications 1 à 6, comprenant en outre l'étape de :
(f) détermination de poses d'appareil améliorées (étalonnées) à partir du résultat de l'optimisation des paramètres de la pose main-oeil.

**8.** Procédé selon l'une des revendications 1 à 6, comprenant en outre l'étape de :
(f) détermination de la précision de l'appareil à partir du résultat de l'optimisation des paramètres de la pose main-oeil.

**9.** Procédé selon l'une des revendications 1 à 8, où les étapes (d) et (e2) sont remplacées par :

(d) la détermination de valeurs approximatives pour les paramètres de la pose main-oeil et pour les paramètres d'une orientation intérieure de la caméra ;
(e2) l'optimisation des paramètres de la pose main-oeil et des paramètres de l'orientation intérieure de la caméra en minimisant simultanément une erreur de rétroprojection des caractéristiques d'image dans les images de caméra capturées et dans les erreurs des paramètres décrivant la pose de l'appareil, les précisions de l'étape (e1) étant prises en compte.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011280472 A1

**In der Beschreibung aufgeführte Nicht-Patentliteratur**

- Accuracy and calibration issues of industrial manipulators. **M. ABDERRAHIM ; A. KHAMIS ; S. GARRIDO ; L. MORENO.** Industrial Robotics: Programming, Simulation and Application. IntechOpen, 2006, 131-146
- **N. ANDREFF ; R. HORAUD ; B. ESPIAU.** Robot hand-eye calibration using structure-from-motion. *The International Journal of Robotics Research,* 2001, vol. 20 (3), 228-248
- **D. C. BROWN.** Close-range camera calibration. *Photogrammetric Engineering,* August 1971, vol. 37 (8), 855-866
- **H. H. CHEN.** A screw motion approach to uniqueness analysis of headeye geometry. *Computer Vision and Pattern Recognition,* 1991, 145-151
- **K. DANIILIDIS.** Hand-eye calibration using dual quaternions. *International Journal of Robotics Research,* 1999, vol. 18 (3), 286-298
- **F. DORNAIKA ; R. HORAUD.** Simultaneous robot-world and hand-eye calibration. *IEEE Transactions on Robotics and Automation,* 1998, vol. 14 (4), 617-622
- A Framework for Low Level Feature Extraction. **W. FÖRSTNER.** Third European Conference on Computer Vision, Lecture Notes in Computer Science. Springer, 1994, vol. 801, 383-394
- **W. FÖRSTNER ; B. P. WROBEL.** Photogrammetric Computer Vision: Statistics, Geometry, Orientation and Reconstruction. Springer International Publishing, 2016
- **C. HARRIS ; M. STEPHENS.** A Combined Corner and Edge Detector. *Proceedings ofthe Fourth Alvey Vision Conference,* 1988, 147-151
- Perspective planar shape matching. **A. HOFHAUSER ; C. STEGER ; N. NAVAB.** Image Processing: Machine Vision Applications II, ser. Proc. SPIE 7251. 2009
- **R. HORAUD ; F. DORNAIKA.** Hand-eye calibration. *International Journal of Robotics Research,* 1995, vol. 14 (3), 195-210
- *Manipulating industrial robots - performance criteria and related test methods,* 1998
- **K.-R. KOCH.** Parameter Estimation and Hypothesis Testing in Linear Models. Springer, 1999
- **K.-R. KOCH.** Introduction to Bayesian Statistics. Springer, 2007
- **K. KOIDE ; E. MENEGATTI.** General hand-eye calibration based on reprojection error minimization. *IEEE Robotics and Automation Letters,* April 2019, vol. 4 (2), 1021-1028
- **R. LENZ ; D. FRITSCH.** Accuracy of videometry with CCD sensors. *ISPRS Journal of Photogrammetry and Remote Sensing,* 1990, vol. 45 (2), 90-110
- **D. G. LOWE.** Distinctive Image Features from Scale-Invariant Keypoints. *International Journal of Computer Vision,* 2004, vol. 60 (2), 91-110
- **W. NIEMEIER.** Ausgleichungsrechung - Statistische Auswertemethoden. de Gruyter, 2008
- **H. NGUYEN ; Q. PHAM.** On the covariance of X in AX = XB. *IEEE Transactions on Robotics,* 2018, vol. 34 (6), 1651-1658
- Open Computer Vision. *Open CV module calib3d,* 07. April 2021, https://docs.opencv.org/4.5.2/d9/d0c/group calib3d.html
- **J. SCHMIDT ; H. NIEMANN.** Data selection for hand-eye calibration: A vector quantization approach. *The International Journal of Robotics Research,* 2008, vol. 27 (9), 1027-1053
- Robust hand-eye calibration of an endoscopicsurgery robot using dual quaternions. **J. SCHMIDT ; F. VOGT ; H. NIEMANN.** Pattern Recognition. Springer, 2003, 548-556
- Calibration-free hand-eye calibration: A structure-from-motion approach. **J. SCHMIDT ; F. VOGT ; H. NIEMANN.** Pattern Recognition. Springer, 2005, 67-74
- **J. L. SCHÖNBERGER ; J. M. FRAHM.** Structure-from-motion revisited. *Conference on Computer Vision and Pattern Recognition (CVPR),* 2016
- **J. L. SCHÖNBERGER ; E. ZHENG ; M. POLLEFEYS ; J.-M. FRAHM.** Pixelwise view selection for unstructured multi-view stereo. *European Conference on Computer Vision (ECCV),* 2016

- **P. SHIAKOLAS ; K. CONRAD ; T. YIH.** On the accuracy, repeatability, and degree of influence of kinematics parameters for industrial robots. *International Journal of Modelling and Simulation,* 2002, vol. 22 (4), 245-254
- **K. H. STROBL ; G. HIRZINGER.** Optimal hand-eye calibration. *2006 IEEE/RSJ International Conference on Intelligent Robots and Systems,* 2006, 4647-4653
- **C. STEGER ; M. ULRICH ; C. WIEDEMANN.** Machine Vision Algorithms and Applications. Wiley-VCH, 2018
- **A. TABB ; K. M. A. YOUSEF.** Solving the robot-world handeye(s) calibration problem with iterative methods. *Machine Vision and Applications,* August 2017, vol. 28 (5), 569-590

- **R. Y. TSAI ; R. K. LENZ.** A new technique for fully autonomous and efficient 3D robotics hand/eye calibration. *IEEE Transactions on Robotics and Automation,* Juni 1989, vol. 5 (3), 345-358
- **M. ULRICH ; C. STEGER.** Hand-eye calibration of SCARA robots using dual quaternions. *Pattern Recognition and Image Analysis,* 2016, vol. 26 (1), 231-239
- **M. ULRICH ; C. WIEDEMANN ; C. STEGER.** Combining scale-space and similarity-based aspect graphs forfast 3D object recognition. *IEEE Transactions on Pattern Analysis and Machine Intelligence,* Oktober 2012, vol. 34 (10), 1902-1914
- **Z. ZHANG.** A flexible new technique for camera calibration. *IEEE Transactions on Pattern Analysis and Machine Intelligence,* November 2000, vol. 22 (11), 1330-1334